# FASCICULE DE BREVET EUROPEEN

(11) **EP 0 779 378 B1**
(45) Date de publication et mention de la délivrance du brevet: **02.02.2000**
(21) Numéro de dépôt: 96119740.7
(22) Date de dépôt: 10.12.1996
(51) Int. Cl.: C23C 26/00, B23H 7/08

(54) **Procédé de fabrication de fils avec une surface de laiton, pour les besoins de l'électro-érosion à fil**
Verfahren zur Herstellung von Drähten mit Messing-Oberflächen für Drahtelektroerosion
Process for fabricating wires with brass surfaces for wire electroerosion

(30) Priorité: 11.12.1995 CH 349195
(43) Date de publication de la demande: 18.06.1997
(73) Titulaire: CHARMILLES TECHNOLOGIES S.A., 1217 Meyrin 1 (CH)
(72) Inventeur: Briffod, Jean Paul, F - 74380 Lucinges (FR)
(74) Mandataire: Micheli & Cie

(56) Documents cités:
- EP-A- 0 185 492
- EP-A- 0 526 361
- US-A- 4 935 594
- PATENT ABSTRACTS OF JAPAN vol. 010, no. 333 (M-534), 12 novembre 1986 & JP 61 136733 A (FUJIKURA LTD), 24 juin 1986,
- PATENT ABSTRACTS OF JAPAN vol. 011, no. 160 (M-592), 23 mai 1987 & JP 61 293725 A (FURUKAWA ELECTRIC CO LTD:THE), 24 décembre 1986,

## Description

L'invention porte sur un procédé permettant de fabriquer des fils à surface de laiton en vue de l'électro-érosion à fil.

Pour l'électro-érosion à fil on utilise couramment du fil de laiton dont la structure et la composition sont adaptées pour obtenir un fil qui répond aux exigences posées en ce qui concerne la contrainte de rupture mécanique ainsi que la conductivité. La fabrication d'un fil de laiton correspondant à ce type d'alliage est relativement coûteuse. A cela s'ajoute que pour chaque variation dans la composition chimique du fil, il faut élaborer un nouvel alliage de base

En partant de ces faits, l'inventeur s'est proposé d'élaborer un procédé tel que décrit plus haut, permettant de fabriquer du fil à surface de laiton, le cas échéant d'une section de teneur en zinc variable, et ce à un prix avantageux et de manière simple.

La solution inventée pour cette tâche se présente ainsi :
un fil de cuivre revêtu de zinc est porté à une température suffisante à la formation de la phase laiton β, avec maintien de cette température jusqu'à diffusion complète du zinc.

Afin d'éviter une évaporation excessive du zinc, il est recommandé de limiter à 750 °C, la température nécessaire à la formation de la phase laiton β.

L'épaisseur du revêtement est choisie telle qu' après diffusion complète du zinc, le fil soit constitué de la phase laiton β sur toute sa section.

Dans les procèdes de fabrication de fils connues comme décrit dans les brevets JP-A-61136733 et la demande EP 0526361 une seule étape de traitement thermique être applique pour obtenir des fils avec de phase laiton β comme décrit ci-dessus.

Par rapport aux techniques actuelles, l'avantage primordial du procédé inventé réside dans la simplicité avec laquelle an peut régler et modifier la teneur en zinc sur la section du fil. En particulier ce procédé permet de obtenir un fil constitué d'une âme en phase laiton α et de surface en phase laiton β.

Ceci permet d'adapter les propriétés de la surface du fil aux conditions opératoires de l'électro-érosion, tout en conférant à l'âme du fil la résistance nécessaire à la rupture. A cette fin, l'enrobage de zinc du fil est choisi à une épaisseur telle que une fois le zinc totalement diffusé, le fil présente en périphérie une phase laiton β, l'âme étant constituée de cuivre. Cette partie centrale en cuivre peut, par une diffusion du zinc de la phase laiton β vers la partie centrale, être transformée en phase laiton α. Pour ce faire il faut -une fois la partie périphérique en phase laiton β et la partie centrale en cuivre constituée - chauffer le fil à une température suffisante pour la formation de la phase laiton α tout en maintenant la chaleur de préférence à une température d'au mains 950 °C, et ce jusqu'à la transformation par diffusion.

Comme la deuxième diffusion, à savoir la transformation par diffusion de cuivre en phase laiton α, est relativement lente, une variante du procédé inventé consiste à accélérer la transformation par une élévation locale de courte durée de la température sur le fil, avec pour effet une fusion localisée du fil. On veillera à limiter cette zone de fusion sur une longueur correspondant à 1 à 10 fois la section du fil, en choisissant de préférence la valeur qui est de 5 fois la section du fil. La stabilité mécanique de la zone en fusion du fil est maintenue par la tension de surface dans la zone de transition entre le métal en fusion et l'air.

Le fil peut être chauffé au four sous forme de bobinage, en veillant toutefois à ce que les spires du fil ne soient pas jointives, pour empêcher toute diffusion entre elles. On choisira de préférence de chauffer le fil de façon continue en le passant par une installation de chauffage au moins, par exemple un four tunnel ou un tuyau chauffant, ou en le chauffant au moyen d'un flux direct de courant électrique.

Les autres avantages, caractéristiques et détails de l'invention apparaîtront dans les descriptions suivantes d'exemples d'applications triés sur le volet, ainsi qu'au travers du dessin inclus ; celui-ci représente schématiquement
- Fig.1-3 la section de plusieurs fils à différents stades après divers traitements thermiques ;
- Fig. 4 la partie d'un fil présentant une fusion locale ;
- Fig. 5 procédé avec une étape de diffusion ;
- Fig. 6 procédé avec deux étapes de diffusion.

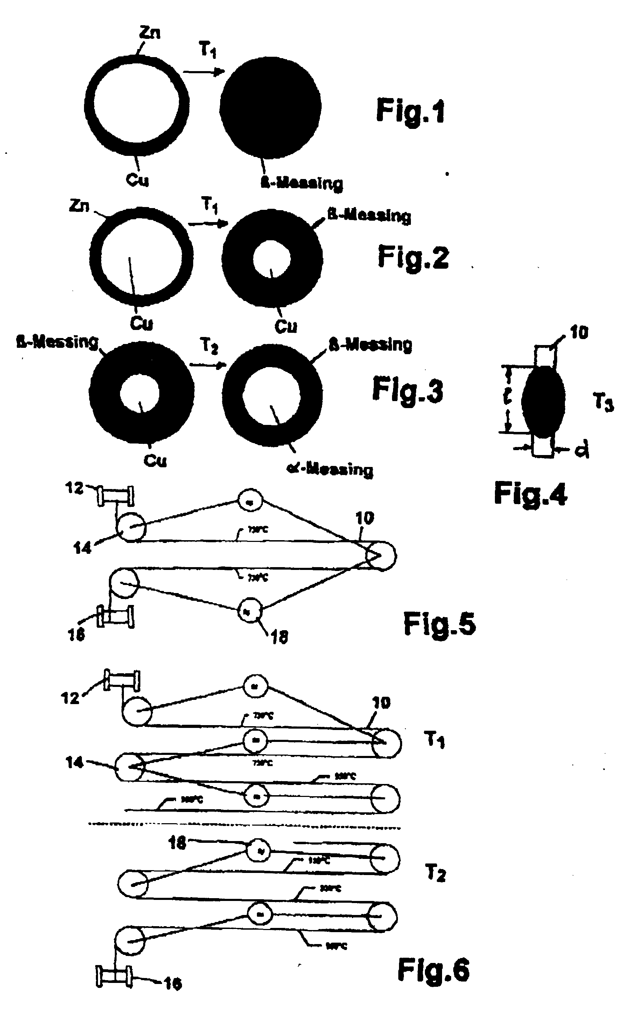

La figure 1 montre un fil de cuivre enrobé de zinc. Pour une épaisseur donnée de l'enrobage de zinc, le traitement à une température T₁ de par exemple 750°C produit, une fois le zinc totalement diffusé, un fil en phase laiton β sur toute sa section.

En figure 2 l'épaisseur de la couche de zinc est plus faible que dans l'exemple de la figure 1. Ici, une fois le zinc totalement diffusé, on obtient une zone périphérique de phase laiton β, avec une partie centrale résiduelle en cuivre. En figure 3 ce fil à deux couches est ensuite chauffé à une température T₂ de par exemple 950°C. Le cuivre est transformé par diffusion en une phase laiton a, ce qui donne un fil dont l'âme est constituée d'une phase laiton a et d'un manteau de phase laiton β.

La figure 4 montre la zone de fusion en surface d'un fil lors de son échauffement à la température T₃ de 1100°C qui est supérieure à la température de fusion du cuivre (1083°C). La longueur l de la zone de fusion en surface est ici d'une valeur cinq fois supérieure à la section du fil.

La figure 5 montre comment est fabriqué un fil en phase laiton β. Un fil 10 est dévidé d'une bobine 12, passe par des rouleaux de renvoi 14, pour être enfin enroulé sur une bobine 16. Dans l'exemple donné, le traitement thermique se fait au moyen d'un flux électrique qui passe au travers du fil alimenté par les sources électriques 18. Celles-ci génèrent une tension entre deux rouleaux de renvoi 14 juxtaposés, avec pour conséquence un courant électrique dans le tronçon de fil intermédiaire. On obtient ainsi un échauffement direct du fil 10.

La figure 6 montre un procédé avec deux étapes de diffusion consécutives destinées à fabriquer un fil avec une partie centrale en phase laiton a et un manteau externe en phase laiton β. Comme la transformation par diffusion du cuivre en phase laiton a est beaucoup plus lente que pour la précédente diffusion du cuivre, la durée de séjour pour une température T₂ de 950°C se trouve allongée de manière correspondante, par l'utilisation d'un plus grand nombre de rouleaux de renvoi 14 dans cette plage de température.

## Revendications

1. Procédé de fabrication de fils pour les besoins de l'électroérosion dans lequel un fil de cuivre revêtu d'une couche de zinc est porté à une température (T₁) suffisante pour la formation d'une phase laiton β et la température étant maintenue jusqu'à diffusion totale du zinc
caractérisé par le fait que
l'épaisseur de l'enrobage de zinc est choisie de façon à ce qu' une fois le zinc complètement diffusé, le fil soit constitué dans sa périphérie, d'une phase laiton β, et dans sa partie central, de cuivre,
et après constitution de cette zone périphérique de phase laiton β et d'une zone centrale de cuivre, le fil est chauffé à une température (T₂) suffisante à l'obtention d'une phase laiton α, cette température étant maintenue jusqu'à la transformation par diffusion de la partie centrale de cuivre en phase laiton α.

2. Procédé selon la revendication 1, caractérisé par le fait que la température (T₂) mise en oeuvre pour la transformation par diffusion du cuivre en phase laiton α est réglée à au moins 950 °C.

3. Procédé selon la revendication 1 ou 2, caractérisé par le fait que pour accélérer la transformation par diffusion du cuivre en phase laiton α, le fil est chauffé localement et pendant une courte durée à une température (T₃) supérieure à la température de fusion du cuivre.

4. Procédé selon la revendication 3, caractérisé par le fait que le fil est porté à une température (T₃) supérieure à la température de fusion du cuivre, et ce sur une longueur (1) correspondant à 1 à 10 fois la section (d) du fil, de préférence à 5 fois la section du fil.

5. Procède selon la revendication 4, caractérise par le fait le traitement thermique est réalisé à une température entre 950 °C et 1100 °C.

## Patentansprüche

1. Verfahren zur Herstellung von Drähten für die Bedürfnisse der Elektroerosion, worin ein mit einer Zinkschicht überzogener Kupferdraht auf eine Temperatur (T₁) gebracht wird, die für die Bildung einer Messing-β-Phase genügt, und die Temperatur bis zur vollständigen Diffusion des Zinks aufrechterhalten wird, dadurch gekennzeichnet, dass
die Dicke des Zinküberzuges so gewählt wird, dass nach vollständiger Diffusion des Zinks der Draht in seiner Peripherie aus einer Messing-β-Phase und in seinem mittleren Teil aus Kupfer besteht,
und nach Aufbau dieses peripheren Bereichs aus Messing-β-Phase und einem mittleren Bereich aus Kupfer der Draht auf eine Temperatur (T₂) aufgeheizt wird, die dafür genügt, eine Messing-α-Phase zu erhalten, wobei diese Temperatur aufrechterhalten wird, bis sich der mittlere Kupferteil durch Diffusion in Messing-α-Phase umgewandelt hat.

2. Verfahren nach Anspruch 1, dadurch gekennzeichnet, dass die Temperatur (T₂), die dazu benutzt wird, das Kupfer durch Diffusion in Messing-α-Phase umzuwandeln, auf mindestens 950 °C eingestellt wird.

3. Verfahren nach Anspruch 1 oder 2, dadurch gekennzeichnet, dass der Draht lokal und während einer kurzen Zeitdauer auf eine Temperatur (T₃) oberhalb des Schmelzpunktes von Kupfer aufgeheizt wird, um die Umwandlung des Kupfers durch Diffusion in Messing-α-Phase zu beschleunigen.

4. Verfahren nach Anspruch 3, dadurch gekennzeichnet, dass der Draht auf eine Temperatur (T₃) oberhalb des Schmelzpunktes von Kupfer aufgeheizt wird, und zwar über eine Länge (1), die einem bis zehn Durchmessern (d) des Drahtes und vorzugsweise fünf Durchmessern des Drahtes entspricht.

5. Verfahren nach Anspruch 4, dadurch gekennzeichnet, dass die Hitzebehandlung bei einer Temperatur zwischen 950 °C und 1100 °C durchgeführt wird.

## Claims

1. A process for manufacturing wires for use in electrical discharge machining applications, wherein a copper wire coated with a layer of zinc is heated to a temperature (T₁) sufficient for forming beta phase brass, this temperature being maintained until completion of the diffusion of the zinc,
characterised in that
the thickness of the zinc coating is selected such that when the diffusion of the zinc is completed, the wire be comprised of a beta phase brass in its periphery and of copper in its central part,
and after the formation of this peripheral zone of beta phase brass and of a central zone of copper, the wire is heated to a temperature (T₂) sufficient for obtaining an alpha phase brass, this temperature being maintained until the transformation by diffusion of the central copper part into alpha phase brass.

2. A process according to claim 1, characterised in that the temperature (T₂) used for the transformation by diffusion of the copper into alpha phase brass is adjusted to at least 950 °C.

3. A process according to claim 1 or 2, characterised in that to accelerate the transformation by diffusion of copper into alpha phase brass, the wire is heated locally and during a short duration of time to a temperature of (T₃) higher than the melting temperature of copper.

4. A process according to claim 3, characterised in that the wire is heated to a temperature (T₃) higher than the melting temperature of copper, over a length (1) corresponding to 1 to 10 times the section (d) of the wire and, preferably, 5 times the section of the wire.

5. A process according to claim 4, characterised in that the thermal treatment is carried out at a temperature between 950 °C and 1100 °C
